Europäisches Patentamt

European Patent Office

Office européen des brevets

(19)

(11) **EP 1 541 870 A2**

(12) **EUROPEAN PATENT APPLICATION**

(43) Date of publication:
**15.06.2005 Bulletin 2005/24**

(51) Int Cl.⁷: **F04C 2/107**

(21) Application number: **04028557.9**

(22) Date of filing: **02.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **11.12.2003 IT to20030993**

(71) Applicant: **Spreafico Vittorino & Fratelli S.R.I.
20054 Nova Milanese (IT)**

(72) Inventor: **Ponzielli, Giuseppe, c/o R.C.T. S.r.l.
21040 Vedano olona (IT)**

(74) Representative: **Garavelli, Paolo
A.BRE.MAR. S.R.L.,
Via Servais 27
10146 Torino (IT)**

(54) **Extruder and related extrusion process**

(57)    A single-flighted conveying-kneading extruder element (70) is disclosed, to be used with fully intermeshing co-rotating twin-screw extruders equipped with one eccentric rotation axis, such extruder element (70) having a circular section over all several planes normal to one axis of said rotation; moreover, a co-rotating twin-screw extruder equipped with single-flighted, conveying-kneading extruder elements (70) and an extrusion process, are disclosed.

Fig. 7

70      70

EP 1 541 870 A2

**Description**

The present invention refers to a single-flighted conveying-kneading element for a co-rotating twin-screw extruder, to an extruder and to a related extrusion process.

Particularly, the present invention applies to fully intermeshing co-rotating twin-screw extruders, either plasticizing extruders (extruders able to melt a thermoplastic solid polymer into a viscous fluid) or melt extruders (extruders able to process a viscous polymeric liquid through various processing steps like mixing, degassing, pumping etc.).

In general, we define as viscous fluids those liquids having a shear viscosity ranging between, for example, 50 and 20000 Pas, under shear rates, for example, ranging between 2 and 20000 $s^{-1}$.

The above-mentioned screw extruders, as widely known, are usually composed of two shafts machined in such a way as to generate a screw channel having a characteristic geometry including a screw angle, a channel depth, and one or more parallel flights.

These shafts are set in motion (rotation) inside a housing composed by two partially-intersecting cylinders, each cylinder having a circular cross section.

Both rotors and housing are made of rigid metals, for example, of steel having high elastic modulus and mechanical resistance.

The design parameters of the screw channel, like screw angle, number of flights, flight width, screw channel depth in the single-screw extruder, or the ratio of the internal barrel diameter to the screw core diameter and screw angle in the co-rotating screw extruder, are well known both theoretically as well as in the design practice and as a general reference literature reference can be made to text books of C.Cogos e Z. Tadmor, Principles of Polymer Processing J. Wiley, 1979 and of Chris J. Rauwendaal, Polymer Extrusion, Hanser 2001.

Single-screw extruders are known, which incorporate helical single-flighted rotors rotating either into elastic or into rigid cylindrical barrels, suitable for conveying viscous fluids, pastes or other kind of liquids. For example US-A-3,208,391 discloses a rigid housing having double-flighted screw. Instead, EP-A-0994256A1 discloses an elastic barrel similarly to US-A-5,358,390. In EP-A-0713974A1 the barrel cross section is not circular.

It is useful to recall here that for a conveying element as used in the present invention, a screw element is meant with helix angle greater than zero and smaller than 90°. With such helix angle the flow direction may be positive or negative depending on flight orientation, whether right-handed or left-handed (with respect to a fixed axis). Such type of conveying element has a melt conveying capability, essentially depending on the peripheral screw speed and the screw angle.

Moreover, in relation to the invention, a kneading element defines a screw element having an helix angle of 90° (= infinite pitch) and therefore zero axial velocity component (cos 90° = 0 and Vbcos 90° = 0) and maximum cross velocity component (sin 90° = 1 and Vbsin 90° = Vb).

A single-flighted conveying-kneading element as known according to conventional design of a fully intermeshing co-rotating twin-screw extruder, has an eccentric cross section which does not match with a circle. It must be recalled here that with fully intermeshing co-rotating twin-screw, the 'intermesh' occurs in the central sectional area where the screws get close mutually in such a way that a continuous ideal contact line can be defined along the longitudinal screw axis.

If the cross section of a conventional conveying-kneading screw element of co-rotating twin-screw extruders is observed, it is clear that the external perimeter line is not as smooth as a circumference, but there are one or more radial transitions, from one curvature radius to a different curvature radius. This condition inevitably brings about, in practice, self-cleaning or self-wiping problems and often may be a source for local screw-screw collisions.

It is also known that there is a lower designing limit for a conveying-kneading element in relation to the helix angle. Indeed if the helix angle is designed to be small, then also the flight width will result thin, according to the relationship:

$$e = \frac{D_b}{2} \alpha \; sen \; \theta_b \tag{1}$$

where e is the flight width, $D_b$ is the internal barrel diameter, $\alpha$ is lobe angle and $\theta_b$ is the screw angle.

As can be noted from expression (1), the width e is a function of the screw angle $\theta_b$. In particular, when a helix angle (angle that occurs when pitch=diameter) is set small, for example smaller than 17.67°, it results that the flight thickness becomes very thin and therefore also very brittle, mechanically. A similar argument may be developed in relation to the screw channel depth H. With conventional screw elements of a fully intermeshing co-rotating twin-screw extruder, a very deep channel corresponds to a very large $D_b/d_s$ ratio (where $d_s$ is the screw core diameter). When H is very deep, therefore the risk of very thin and brittle flights is incurred in. In conclusion, when designing conventional fully intermeshing co-rotating twin-screws, there are limits deriving either from the screw angle which should be not smaller than, for example, 10° or from the depth H which should be not larger than that value as resulting, for example, from $D_b/d_s=1.6$ (it is useful here to recall that $H=(D_b-d_s)/2$).

Object of the present invention is overcoming the disadvantages inherent to the prior art by disclosing a single-flighted conveying-kneading element, suitable for fully intermeshing co-rotating twin-screw extruders as well as an extruder equipped with such an element able to enhance the extrusion process.

Another object of the present invention is providing a single-flighted conveying-kneading element to be used with fully intermeshing co-rotating twin-screw extruders suitable for keeping the screws centred when rotating, as to ensure a better balance during the screw rotation. The application of such device can be done in any place over the screw axis

A further object of the present invention is providing an extrusion process with improved efficiency.

The above and other objects and advantages of the present invention, as will appear from the following description, can be achieved by the single-flighted conveying-kneading element suitable for fully intermeshing co-rotating twin-screw extruder, as claimed in claim 1.

Moreover, the above and other objects of the present invention can be achieved by means of an extruder and an extrusion process like those claimed respectively in claims 5, 6 e 12.

Preferred embodiments and non-trivial variations of the present invention are the subject of the dependent claims.

The present invention will be better described by some preferred embodiments, provided as non-limiting examples, with reference to the enclosed drawings in which:

- FIG. 1 shows a cross-sectional view of conventional, double flighted, fully intermeshing conveying-kneading elements of co-rotating twin-screws, according to the prior art;
- FIG. 2 shows another cross-sectional view of the conveying-kneading screws of FIG. 1, after some degrees rotation;
- FIG. 3 shows another cross-sectional view of the conveying-kneading screws of FIG. 1, after some further degrees rotation;
- FIG. 4 shows a side view and corresponding cross-sectional view for double flighted, fully intermeshing conveying-kneading elements of co-rotating twin-screws, according to the prior art;
- FIG. 5 shows a cross-sectional view of conventional, single-flighted, fully intermeshing conveying-kneading element of co-rotating twin-screws, according to the prior art;
- FIG. 6 shows another cross sectional view of conveying-kneading screws of FIG. 5, after some degrees rotation;
- FIG. 7 is a view of two fully intermeshing conveying-kneading elements according to the present invention, around the rotation axis;
- FIG. 8 is a cross sectional view of a fully intermeshing co-rotating twin-screw extruder according to the present invention;
- FIG. 9 shows the pressure profile $\delta P/\delta x$ over the circumferential axis x in rectangular coordinates of a conveying element according to the present invention, unrolled on a flat plane: the upper wall is the barrel, assumed to be in motion, and the lower wall is the screw, assumed to be stationary;
- FIG. 10 shows an axial sectional view of conveying screws of a co-rotating twin-screw extruder according to the present invention; and
- FIG. 11 shows a conveying-kneading element rotating around the rotation axis according to the invention.

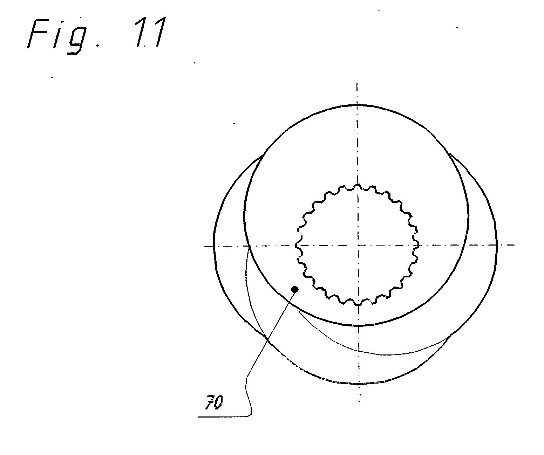

In FIG. 11, the conveying-kneading element 70 according to the invention is a single-flighted element, namely defined by a single conveying channel for each screw. In contrast to other single-flighted conveying-kneading elements known in the extrusion of thermoplastic polymers, the element 70 has an eccentric cross section corresponding to a circle of diameter $d_s$ such as $D_b>d_s>R_b$ where letters D e d refer to the diameters, letter R refers to the radius and pedices b and s refer respectively to the barrel and to the screw.

Moreover, the element 70 according to the present invention, is designed as to be used with co-rotating twin-screw extruders, namely extruders having screw elements which rotate in the same direction, inside partially intersecting cylindrical chambers, being each one of these partially intersecting chambers rigorously circular. It should be also noted that such chambers will be preferably made of rigid metals and therefore manufactured by tough and resistant steel alloys.

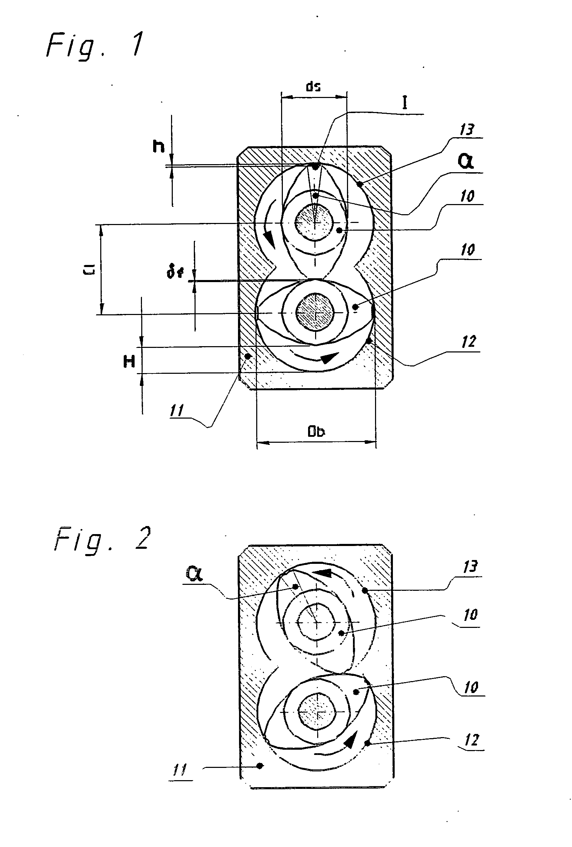

With reference to FIG. 1, a double flighted screw pair 10 according to the prior art is shown. Such screws 10 both rotate in the same clockwise direction inside a double cylinder chamber 11 shaped like an 'eight'. The screws 10 show cross sections which are staggered by 90°, one to the other. This particular arrangement is required for ensuring a fully intermeshing character to the rotation, meaning that screws 10 are designed in such a way that, after set in simultaneous rotation by such mutual arrangement, are able to stay in close contact near the intermeshing area along an ideal longitudinal line. The expression 'in contact' should be intended here as synonymous of 'very close', but, of course, not so close as to enter in physical contact with each other and prevent the screw motion. The intermeshing clearance, indicated in the Figures with symbol $\delta_f$, may vary from some cents of millimeter to some millimeters, depending essentially on the type of designed process, in accordance with known rules governing the viscous flow dynamics. From FIG. 1, it can also be seen that the section of screw 10 has no circular shape and 'contacts' the barrel wall 12, 13, where it is set in motion, not only over a single point but over the arc of circumference corresponding to the angle indicated as angle $\alpha$ in the Figures. The 'eight' shaped section of the chamber 11 is the geometrical result of an ideal partial superposition of two identical circular sections. The chamber 11, which is called 'bi-cylindrical' for sake of brevity, respectively communicates each screw 10 with the contiguous barrel along the various angular positions, occurring during one complete revolution. In general it can be said that the essential geometrical parameters of such sectioned view are respectively: the internal diameter of each 'cylindrical' chamber $D_b$, the diameter of each screw core $d_s$, the intermeshing clearance $\delta_f$, the centerline Cl between the screws 10, the minimum and maximum spacing h and H between the external surface of each screw 10 and the internal wall 12, 13 of each cylinder of the bi-cylindrical chamber 11 and finally the angle $\alpha$ corresponding to the arc of circumference contacting the internal barrel walls 12, 13. As already stated, angle $\alpha$ is a function of diameter $D_b$, ratio $D_b/d_s$ and helix angle $\theta$. When $D_b$ and helix angle are reduced or $D_b/d_s$ ratio is designed to be higher, then angle $\alpha$ becomes smaller. Normally said arc of circumference corresponding to said angle $\alpha$ has some millimetres length value. For example in a co-rotating twin-screw extruder of diameter 120 mm, $D_b/d_s$=1.75 and helix angle of 90°, the arc length corresponding to $\alpha$ is about 15 mm, but the same arc drops down to 6 mm when $\alpha$ increases to 23°. It is superfluous to note that both cylindrical chambers 11 have rigorously circular cross section.

FIG. 2 substantial reproduces the same view as FIG. 1 with the only exception that both sections of the intermeshing screws 10 are simultaneously rotated clockwise by some degrees. It can be seen that, regardless of the rotation, there is always a single intermeshing 'contact point' between the screws 10, although the location of such contact point is different from the analogous contact point of FIG. 1.

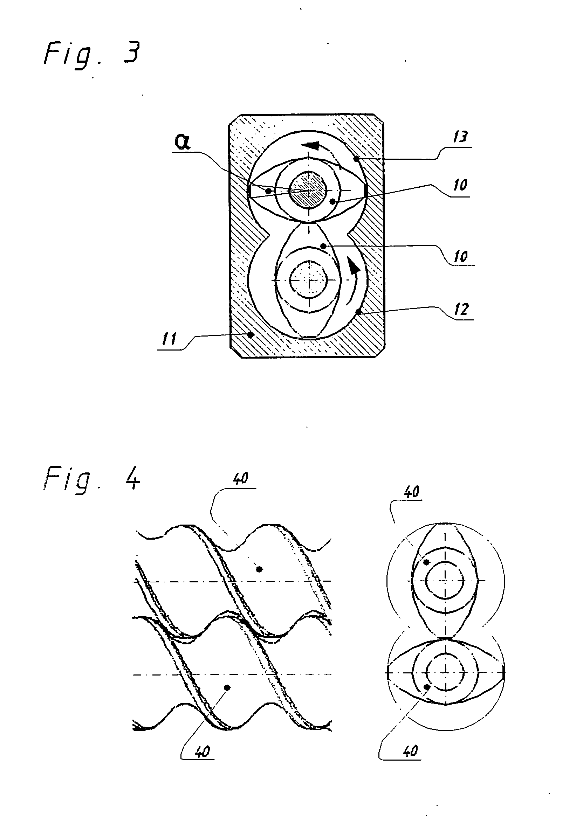

FIG. 3 substantial reproduces the same view as FIG. 1 and 2, with the only exception that both sections of the intermeshing screws 10 are further simultaneously rotated clockwise by some degrees. It can be seen that, regardless of this further rotation, a single contact point always exists between the screws 10, in the central intermeshing area, and, in such case, the contact point position is the same as in FIG. 1. This due to the fact that both screws 10 are rotated by 90° respect to the position shown in FIG. 1 and therefore have gained identical mutual, but inverted positions.

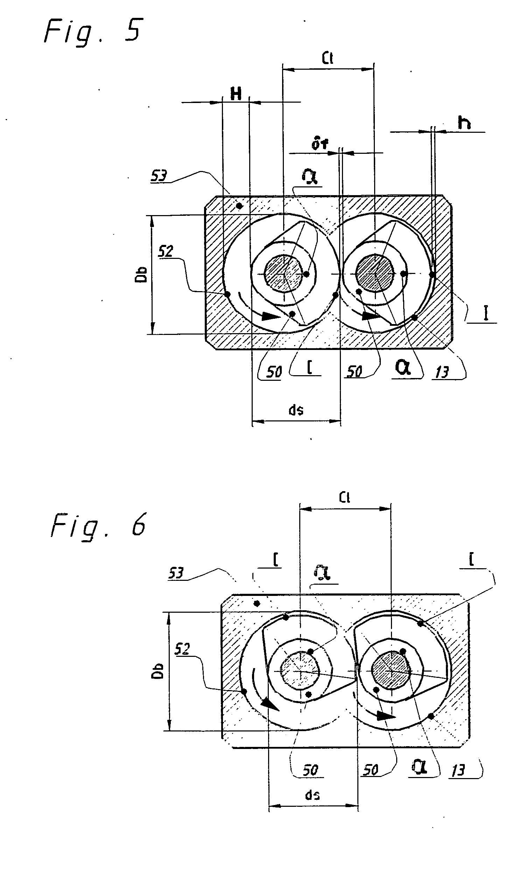

FIG. 4 shows a side and a sectional view of two double flighted, fully intermeshing, co-rotating screws 40 according to the prior art. Fig 5 shows a sectional view of two double flighted, fully intermeshing, co-rotating screws 50 according to the prior art. In FIG. 5 we note the same characteristic parameters of FIG. 1, and namely a cylindrical chamber diameter $D_b$, of circular section, a diameter of screw core 50 $d_s$, an intermeshing clearance $\delta_f$, a minimum gap h and maximum gap H, between the external surface of each screw 50 and the internal wall 51, 52 of each cylinder of bi-cylindrical chamber 53, a centerline Cl between screws 50 and an angle $\alpha$ corresponding to the arc of length l. It must be recalled that the relationship between $\alpha$ and l is l= $\Pi D_b \alpha/360°$. It can be noted that the angle $\alpha$ and the related arc l, in this case, become substantially bigger than in cases reported in FIG. 1, 2 and 3.

FIG. 6 substantial reproduces the same view shown by FIG. 5 with the exception that the screw 50 sections are simultaneously rotated by some degrees clockwise. It can be seen that, regardless the rotation, a single contact point always exists between screws 50 in the central intermeshing area, though the contact point location differs from the previous contact point of FIG. 5.

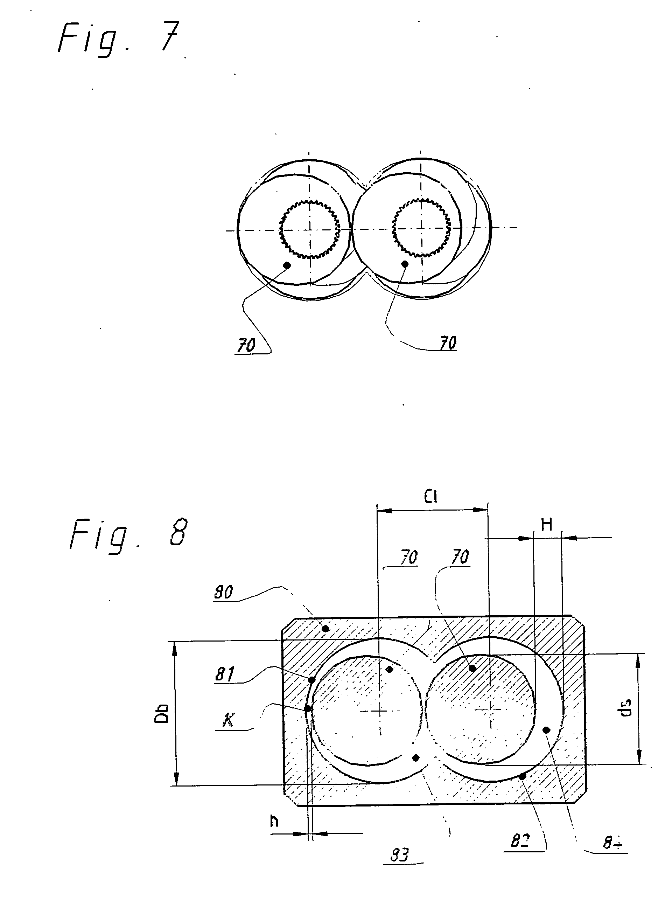

FIG. 7 shows two single-flighted, fully intermeshing, conveying-kneading elements 70 according to the present invention; it may be noted that, in contrast with the prior art, elements 70 show an eccentric section which matches perfectly with a circle. This arrangement of elements 70 brings about two basic consequences:

- screw 70 is always substantially tangent to the cylinder, wherein it rotates, only in one point;
- the curvature radius of the screw 70 section is constant, since it belongs to the same circle, regardless its relative position to the barrel wall.

FIG. 8 shows a cross sectional view of an extruder equipped with co-rotating, fully intermeshing, elements 70 according to the invention. The cross sections of each screw 70 have a circular shape and therefore must have only one contact point in common with the internal wall 81, 82 of each cylinder 83, 84 of the bi-cylindrical chamber 80; these cylinders in turn having a circular cross section. As already seen, this is an essential aspect of the single-flighted conveying-kneading element according to the invention, which provides many advantages.

Moreover, it can be noted in FIG. 8 that the bi-cylindrical chamber 80 has an internal bi-circular chamber section but an external squared section. This particular external shape allows for manufacturing inside the bi-cylindrical chamber 80 ducts, holes for various purposes, like for example for heat exchange fluid channels, temperature or pressure sensors, liquid injection and so like.

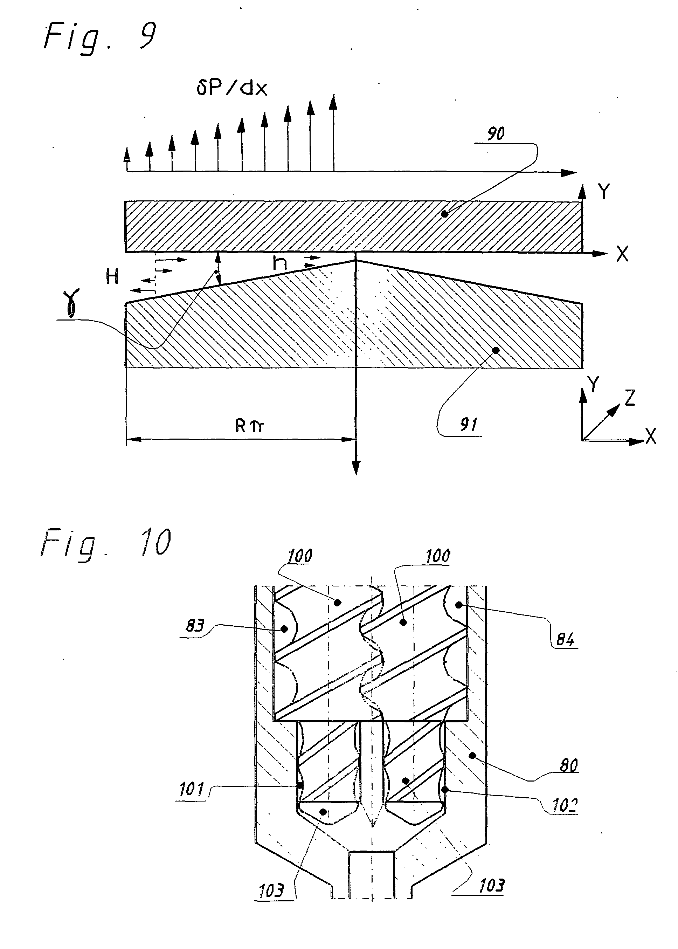

FIG. 9 diagrammatically shows the melt flow according to rectangular coordinates of an element according to the invention, along the axis of the screw circumference (x), with the simplification that the barrel 90 is in motion and the screw 91 is stationary (simplification allowed by the principle of relative motion). Rotational flows can be observed from left to right, reducing more and more to pure shear and to elongational flows, as the melt advances toward the minimum gap h, between the flight and the barrel. From FIG. 9, it can be noted that melt conveying (drag flow), over the x axis, in the wedge region between H and h, is strong, while the extensional flow components are mild. Next, some equations are reported to clarify mathematically the flow rate over x and the stretch rate (refer, for example, to Mixing in the Farrel Continuous Mixer, of E. L. Canedo e L. N. Valsamis in Mixing and Compounding of Polymers, Hanser 1994):

$$Q = \frac{V_{bx}}{2} h(1 + S) \qquad\qquad (2)$$

$$\dot{\varepsilon}_{av} = (1 + S) \frac{h}{H} \tan \gamma \frac{V_b}{H} \qquad\qquad (3)$$

where :

h = minimum distance between the eccentric section and the barrel;
H = maximum distance between the eccentric section and the barrel;
$V_b$ = tangential speed of the screw, at barrel location
$\gamma$ = taper angle $\cong$ arctang[(H-h)/($\pi R_b$/p)]
p = number of parallel flights
S is a purely geometrical flow rate coefficient which, for Newtonian fluids, may take the form:

$$S = \frac{\left(1 - \dfrac{h}{H}\right)^2}{1 + 2\left(\dfrac{e}{h}\right)\tan\gamma - \left(\dfrac{h}{H}\right)^2} \qquad\qquad (4)$$

where :
e = flight width.

In conclusion, with the conveying-kneading element according to the invention it is possible to adjust the energy to be discharged on the melt in a better way than it could be done by conventional elements, but the maximum pressure achievable over x is higher.

FIG. 10 shows an axial sectional view of a co-rotating, fully intermeshing twin-screw extruder, equipped upstream by conventional screws 100, each one rotating inside a cylindrical chamber 83, 84; each screw 100 is composed of a rotor portion 103 having a circular section diameter smaller than the diameter of the outside circular section diameter of the screw 100; moreover each of these rotor portions 103 is suitable for rotation inside its own independent cylindrical chamber 101, 102 designed by reducing the diameter of the circular section of the cylindrical chamber 83, 84. This extruder arrangement allows for specific hydrodynamic radial balance according to the invention. It seems obvious that, in another embodiment, conventional screws 100 may be replaced by conveying-kneading elements 70 according to the invention.

When analysing further FIG. 1, it is easy to realize that the melt flow along the circumference of the element, can be classified as a drag flow over a convergent section. It is known that drag flow over a convergent section can generate very high pressures near to the lobe (just before the lobe in the flow direction). This principle is well known in hydrodynamic lubrication and widely used in engineering applications (see for example US-A-5,772,334 entitled Fluid Film Bearings) when viscous fluids can be used. As previously described, one of the objectives of the single-flighted conveying-kneading element 70 relies on that it can be used as balancing device for the screws. While it is obvious that the application is limited to viscous fluids, there is no restriction about the location where it can be mounted along the screw axis, whether in the mid zone or in the end zone or elsewhere. In general the rotating screw is loaded by its own weight as well as by radial forces which never distribute uniform along the outside screw circumference as desirable.

The objective to keep the screw balanced, during the rotation, around an hydrodynamic bearing, generated by a fluid film dragged in pressure along the barrel circumference, seems to be important both in relation to the process uniformity as well as to the screw wear. For example, it is known that the designed flight-barrel clearances in a fully intermeshing, co-rotating twin-screw extruder are critical as they directly affect the circumferential flow rate and the stretching rate of the melt, and therefore are decisive for an efficient dispersive mixing. Now if the screw will oscillate radially due to irregular pressure distribution along the barrel circumference, the critical flight-clearances cannot remain as constant as desirable. In co-rotating twin-screw extruders, ideally the flight-barrel clearances should be kept identical over a complete revolution. Now it is believed that an efficient way to keep the screw balanced upon rotation with constant flight-barrel clearances, is to apply an hydrodynamic bearing system. The system provides that the diameter of an end portion of such screws is reduced as to create two independent barrels, one for each screw, each having a diameter which is smaller than the screws diameter rotating in the bi-cylindrical chamber.

It should be noted that the end rotor portions 103, which are placed inside the cylinder blocks 101, 102, may be indifferently either conveying or kneading elements according to the definition for conveying and kneading reported here. Both types of elements may provide the right processing solution, depending on the specific application. If the bearing elements have an helix angle of 90°, then the axial flow through those elements will be a pure pressure flow, driven by the pumping system upstream. On the other hand, when such elements are conveying elements the resulting pressure gradient may be positive or negative depending on the die head configuration.

The generation of net circumferential pressure P1-P0 vs depth H, between locations $H_0$ and h, for a Newtonian (shear insensitive) viscous fluid, may be expressed by the following relation:

$$\Delta P = \frac{3\eta V_{bx}}{h}\cot\gamma\left[2-(1+S)\left(\frac{h}{H}+\frac{h}{H_0}\right)\right]\left(\frac{h}{H}-\frac{h}{H_0}\right) \quad (5)$$

where:

$\eta$ = shear viscosity;
$P_0$ = Pressure in $H_0$;
$P_1$ = Pressure in h;
$\gamma$ = taper angle

and with x ranging between -nR and 0.

From relation (5), it is obtained that the pressure peak along x increases when taper angle $\gamma$ decreases. Therefore a conveying-kneading element according to the invention, while providing a rather soft stretch rate along x circumference, does ensure a very high pressure peak Pmax, higher than the peak achievable with conventional elements.

FIG. 11 shows a single conveying-kneading element 70 according to the present invention; from the figure it is possible to note again that, similarly to FIG. 7, the element 70 has an eccentric cross section corresponding to a circle.

As far as the terminology is concerned, often the word chamber has been used for referring to a co-rotating twin-screw extruder. It should specified here that the term diameter of the bi-cylindrical chamber refers always to each diameter of each of the two partially superposed cylindrical chambers.

Another important advantage of the element 70 according to the invention is that its flight width is practically independent from the helix angle, as far as the mechanical flight strength is concerned. Indeed, due to the taper angle which results always to be rather small, [$\alpha \cong$ arctan [(H-h) / ($\pi R_b$/p)]], the flight flank always results to be mechanically strong, regardless the designed pitch or $D_b/d_s$, and so far the typical limits of the conventional technology do vanish. This circumstance my be useful for some specific applications, for when it is important to extend the screw down channel (z axis) over a certain axial distance (l axis). Since the actual screw down channel length is the ratio of the axial length to the sin of the helix angle, it is clear that by reducing the helix angle it is possible to extend considerably the channel down flow path (of course up the extent the filling factor is less than 1). This design, for example, may be useful in case of degassing a melt from volatiles residues, since the degassing efficiency increases vs down channel length, for a given flow rate. Of course if the flow remains constant, then the mean fluid residence time in the degassing zone cannot increase, because due to the velocity components down the channel, the melt will advance faster. But the melt surface renewal, one of the key factors for degassing, may increase significantly. Another case where the extension of the screw down channel may be useful is when large amount of fillers have to be incorporated into viscous fluids. Also in this case the screw down channel length favours the process which is dominated by the interface rate $\delta A/\delta t$, where A is the melt-filler interface and t the processing time.

Moreover, the present invention relates to an extrusion process of thermoplastic polymeric materials in the solid or molten state based on an extruder according to the present invention. The process according to the present invention comprises the steps of:

- feeding thermoplastic polymeric material into a fully intermeshing co-rotating twin-screw extruder, equipped with single-flighted, conveying-kneading elements 70, according to the present invention;
- processing the thermoplastic polymeric material by means of shearing, conveying and kneading actions, provided by the extrusion elements 70, 100, 103; and
- delivering and collecting thermoplastic polymeric material out of the extruder, after processing.

**Claims**

1. Single-flighted, conveying-kneading extruder element (70) for a fully intermeshing co-rotating twin-screw extruder, equipped with an eccentric rotation axis, **characterized in that** it has a circular section with respect to a plurality of planes that are normal to an axis of said rotation.

2. Single-flighted, conveying-kneading extruder element (70) for fully intermeshing co-rotating twin-screw extruder according to Claim 1, **characterized in that** it has an helix angle of 90°.

3. Single-flighted, conveying-kneading extruder element (70) for fully intermeshing co-rotating twin-screw extruder according to Claim 1, **characterized in that** it has an helix angle that is greater than 0° and smaller than 90°.

4. Single-flighted, conveying-kneading extruder element (70) for fully intermeshing co-rotating twin-screw extruder according to Claim 1, **characterized in that** it has a channel with maximum screw depth that is equal or smaller than the radius of said circular section.

5. Twin-screw extruder **characterized in that** it is equipped with at least two single-flighted, fully intermeshing, co-rotating extruder elements (70), at least one external surface of each of said rotating extruder elements (70) being substantially tangent in a single point to an internal surface (81, 82) of a substantially-rigid bi-cylindrical chamber (80), composed of the intersection of two substantially-rigid cylindrical chambers (83, 84) with circular cross section of said twin-screw extruder, within which said elements (70) respectively perform said rotations, and said external surfaces being mutually tangent in one point ($\delta_f$) in one central intermeshing zone during said rotations of said extruder elements (70).

6. Twin-screw extruder according to claim 5, **characterized in that** the distance between the centres of said rotation axes of each of said extruder elements (70) is smaller than the diameter of a section of said bi-cylindrical chamber (83, 84) belonging to said by-cylindrical chamber (80).

7. Twin-screw extruder according to claim 5, **characterized in that** the minimum clearance between said external surfaces of said extruder elements (70) in said intermeshing central zone ranges between 0 and 5 millimetres.

8. Twin-screw extruder according to claim 5, **characterized in that** the diameter of said circular section of said extruder element (70) is smaller than the diameter of said cylindrical chamber (83, 84) and larger than the radius of said cylindrical chamber (83, 84).

9. Twin-screw extruder according to claim 5, **characterized in that** the minimum clearance between said external surface of said extruder element (70) and said internal surface (81, 82) of said cylindrical chamber (83, 84) preferably ranges between 0 e 5 millimetres.

10. Twin-screw extruder **characterized in that** it is equipped with at least one pair of fully intermeshing, co-rotating, extruder elements (100) rotating in said bi-cylindrical chamber (80), each of said extruder elements (100) having a rotor portion (103), said rotor portion (103) being a single-flighted conveying-kneading, extruder element (70) according to any of claims 1 to 4, a diameter of one circular section of said rotor portion (103) being smaller than a diameter of one circular section of said extruder element (100) and each of said rotor portions (103) rotating inside its own independent cylindrical chamber (101, 102).

11. Co-rotating twin-screw extruder according to claim 10, **characterized in that** said cylindrical chamber (83, 84) has in one point of its own longitudinal axis a diameter reduction of one of its own circular sections.

12. Process for extruding a thermoplastic polymeric material either in a solid or liquid state comprising the steps of:

- feeding said thermoplastic polymeric material into an extruder according to any of claims 5 to 11;
- processing said thermoplastic polymeric material by means of shearing, conveying or kneading actions performed by said extruder elements (70, 100, 103); and
- delivering and collecting said thermoplastic polymeric material out of said extruder.

Fig. 1

Fig. 2

Fig. 3

Fig. 4

**Fig. 5**

**Fig. 6**

Fig. 7

Fig. 8

## Fig. 9

$\delta P/dx$

90

Y

X

H

h

$\gamma$

91

R $\pi$

Y
Z
X

## Fig. 10

100    100

83

84

80

101

102

103    103

Fig. 11

70